# EUROPEAN PATENT APPLICATION

(11) **EP 4 439 820 A1**
(43) Date of publication of application: **02.10.2024**
(21) Application number: 24159156.9
(22) Date of filing: 22.02.2024
(51) Int. Cl.: H01M 50/209, H01M 50/213, H01M 50/503

(54) **BATTERY PACK**

(30) Priority: 28.03.2023 JP 2023052232
(71) Applicant: Murata Manufacturing Co., Ltd., Nagaokakyo-shi, Kyoto 617-8555 (JP)
(72) Inventor: Miebori, Tadashi, Kyoto-fu, 617-8555 (JP)
(74) Representative: Witte, Weller & Partner Patentanwälte mbB

(57) **Abstract**

Provided is a battery pack that is capable of obtaining sufficient waterproof property. A battery pack according to one aspect of the present technology includes a plurality of batteries, a holder that is capable of supporting the plurality of batteries, and an elastic body that is provided between the batteries and the holder. Each battery has an end surface on which a positive electrode terminal having a convex shape is formed. The holder has a side plate portion provided with a first opening at a place facing the positive electrode terminal. The elastic body includes a sheet portion and a projection. The sheet portion is arranged in a region between the end surface of the battery and the side plate portion of the holder. The sheet portion is provided with a second opening having an opening diameter smaller than that of the first opening at a place facing the positive electrode terminal. The projection is configured to project toward both the side plate portion side and the positive electrode terminal side of the sheet portion, and to be in contact with the side plate portion and the positive electrode terminal.

## Description

### BACKGROUND OF THE INVENTION

### 1. FIELD OF THE INVENTION

The present technology relates to a battery pack.

### 2. DESCRIPTION OF THE RELATED ART

In general, a battery module having a battery such as a lithium ion secondary battery is used in a state of being accommodated in a case. When moisture or the like enters the battery module, the battery may fail. Therefore, for example, in the invention described in Japanese Patent Application Laid-Open No. 2013-073864, it is proposed to provide a rubber ring between the positive electrode terminal and the battery accommodating portion.

### SUMMARY OF THE INVENTION

By the way, in the battery pack, further improvement in waterproof property is required. It is desirable to provide a battery pack with improved waterproof property.

A battery pack according to one aspect of the present technology includes a plurality of batteries, a holder that is capable of supporting the plurality of batteries, and an elastic body that is provided between the batteries and the holder. Each battery has an end surface on which a positive electrode terminal having a convex shape is formed. The holder has a side plate portion provided with a first opening at a place facing the positive electrode terminal. The elastic body includes a sheet portion and a projection. The sheet portion is arranged in a region between the end surface of the battery and the side plate portion of the holder. The sheet portion is provided with a second opening having an opening diameter smaller than that of the first opening at a place facing the positive electrode terminal. The projection is configured to project toward both the side plate portion side and the positive electrode terminal side of the sheet portion, and to be in contact with the side plate portion and the positive electrode terminal.

In the battery pack according to one aspect of the present technology, an elastic body is provided between the battery and the holder. The elastic body is provided with a projection that projects toward both the side plate portion side and the positive electrode terminal side of the sheet portion of the elastic body and is in contact with the side plate portion of the holder and the positive electrode terminal of the battery. With such a configuration, the side plate portion of the holder and the projection are brought into close contact with each other and the positive electrode terminal of the battery and the projection are brought into close contact with each other using elastic force of the elastic body. As a result, entry of moisture into the positive electrode terminal can be prevented. Therefore, sufficient waterproof property can be obtained.

The effect of the present technology is not necessarily limited to the effect described here, and may be any effect of a series of effects relating to the present technology described later.

### BRIEF DESCRIPTION OF THE DRAWINGS

FIG. 1 is a view illustrating a perspective configuration example of a battery pack according to one embodiment of the present technology;
FIG. 2 is a view illustrating a perspective configuration example of a battery module housed in the battery pack of FIG. 1;
FIG. 3 is a view illustrating a developed perspective configuration example of the battery module of FIG. 2;
FIG. 4 is a view illustrating a sectional configuration example of the battery, the holder, and the elastic waterproof member of FIG. 3;
FIG. 5 is a view illustrating a perspective configuration example of one end (positive electrode portion) of the battery of FIG. 3;
FIG. 6 is a view illustrating a sectional configuration example of one end (positive electrode portion) of the battery of FIG. 3;
FIG. 7 is a view illustrating a sectional configuration example of a part (the positive electrode portion and the vicinity thereof) of the battery module of FIG. 2;
FIG. 8 is an enlarged view of a part of FIG. 7;
FIG. 9 is a view illustrating a sectional configuration example when a metal tab is removed from the battery module of FIG. 2;
FIG. 10 is an enlarged view of a part of FIG. 9;
FIG. 11 is a view illustrating a sectional configuration example of the elastic waterproof member of FIG. 9;
FIG. 12 is a view illustrating a configuration example of an upper surface of the elastic waterproof member of FIG. 11;
FIG. 13 is a view illustrating a configuration example of a back surface of the elastic waterproof member of FIG. 11;
FIG. 14 is a view illustrating one example of a water immersion test result of the battery packs of the comparative example and the example;
FIG. 15 is a view illustrating a sectional configuration example of a part (the positive electrode portion and the vicinity thereof) of a battery module housed in a battery pack according to Comparative Example 1;
FIG. 16 is a view illustrating one modification of the sectional configuration of the elastic waterproof member of FIG. 11;
FIG. 17 is a view illustrating one modification of the sectional configuration of the elastic waterproof member of FIG. 11;
FIG. 18 is a view illustrating one modification of the sectional configuration of the elastic waterproof member of FIG. 11;
FIG. 19 is a view illustrating one modification of a sectional configuration of a part (the positive electrode portion and the vicinity thereof) of the battery module of FIG. 7; and
FIG. 20 is a view illustrating one example of a water immersion test result of the battery packs of the comparative example and the example.

### DETAILED DESCRIPTION OF THE INVENTION

Hereinafter, embodiments for carrying out the present technology will be described in detail with reference to the drawings. Note that the order of description is as follows.
1. Embodiments
1-1. Configuration
1-2. Effects
2. Modifications
2-1. Modification A
2-2. Modification B
2-3. Modification C
2-4. Modification D

### <1. First embodiment>

First, a battery pack 1 according to one embodiment of the present technology will be described.

The battery pack 1 described here is a power supply including a plurality of batteries, and is applied to various applications such as electronic devices. The kind of the battery is not particularly limited, and may be a primary battery or a secondary battery. The kind of the secondary battery is not particularly limited, and is specifically a lithium ion secondary battery or the like in which a battery capacity is obtained using occlusion and release of lithium ions. The number of batteries is not particularly limited, and thus can be set arbitrarily. Hereinafter, a case where the battery is a secondary battery (lithium ion secondary battery) will be described.

### [1-1. Configuration]

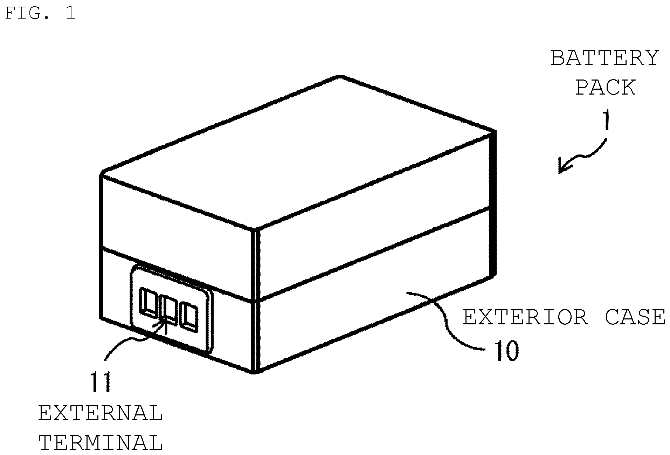

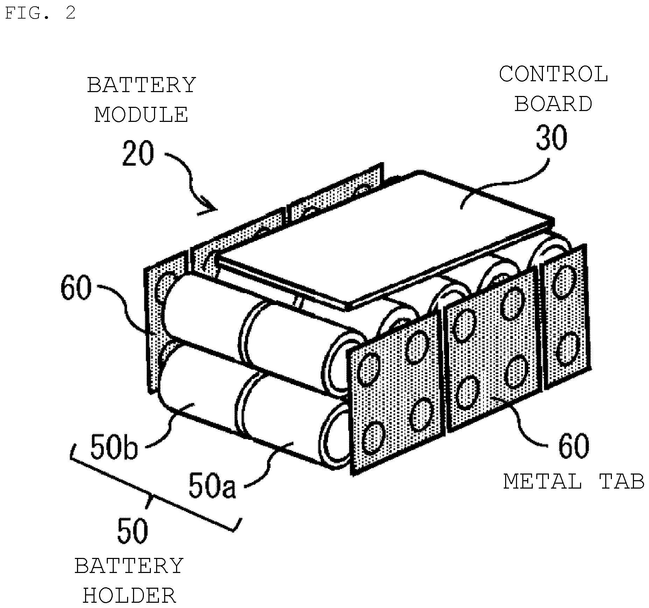

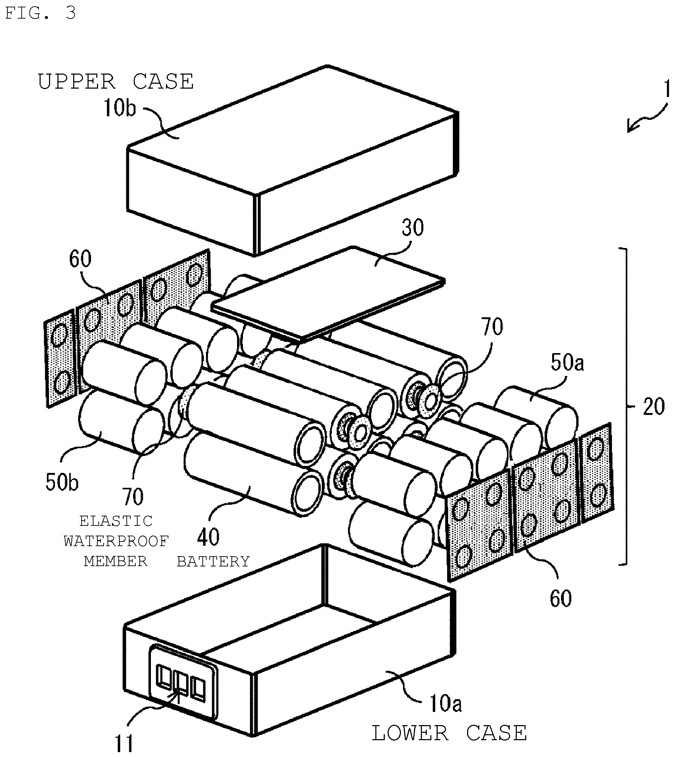

FIG. 1 illustrates a perspective configuration example of the battery pack 1 according to one embodiment of the present technology. FIG. 2 illustrates a perspective configuration example of the housed object of the battery pack 1. FIG. 3 illustrates a developed perspective configuration example of the housed object of the battery pack 1.

For example, as illustrated in FIGS. 1 and 2, the battery pack 1 includes an exterior case 10 and a battery module 20 housed in the exterior case 10. The battery module 20 includes a control board 30. The control board 30 is connected to, for example, positive and negative electrode terminals of each battery 40 to be described later, and includes a circuit that measures the voltage of each battery 40, detects the remaining capacity of each battery 40, measures the current output from each battery 40 to detect the presence or absence of an overcurrent, and the like.

The exterior case 10 includes, for example, a lower case 10a and an upper case 10b as illustrated in FIG. 3. By overlapping the lower case 10a and the upper case 10b with each other, a housing space for housing the battery module 20 is formed. The exterior case 10 can house the battery module 20. An external terminal 11 connected to the control board 30 is provided in the exterior case 10 (for example, lower case 10a). The plurality of batteries 40 is connected to the external terminal 11 via the control board 30.

The exterior case 10 is made of a resin material such as polyethylene (PE), polypropylene (PP), polycarbonate (PC), modified polyphenylene ether (mPPE), polyamide (PA), polybutylene terephthalate (PBT), a copolymer synthetic resin of acrylonitrile-butadiene-styrene (ABS), or polyacetal (POM). The exterior case 10 may be made of, for example, metal or a resin material in which a conductive material such as a conductive filler is dispersed. The resin material at this time may be the above-described resin material.

The battery pack 1 has a discharge mode in which power output from the battery module 20 is supplied to a load via the external terminal 11. The battery pack 1 may further have a charge mode in which power supplied from a power supply, connected to the external terminal 11, via the external terminal 11 is accumulated in the battery module 20. When the battery 40 is a secondary battery, the control board 30 switches between the discharge mode and the charge mode according to the type of a connected object connected to the external terminal 11. When the battery 40 is a primary battery, the control board 30 executes only the discharge mode.

The battery module 20 includes a plurality of batteries 40 and a plurality of metal tabs 60. The plurality of batteries 40 is electrically connected via a plurality of metal tabs 60. For example, the plurality of batteries 40, which are some of the plurality of batteries 40, are connected in series to each other by the plurality of metal tabs 60, and when the plurality of batteries 40 connected in series to each other is referred to as a series unit, the plurality of series units are connected in parallel to each other by the plurality of metal tabs 60. The connection mode of the plurality of batteries 40 is not limited to the above.

Each metal tab 60 is formed of, for example, a metal lead plate. Each battery 40 is a primary battery or a secondary battery. When each battery 40 is the secondary battery, the type of the secondary battery is not particularly limited, and is specifically the lithium ion secondary battery or the like in which the battery capacity is obtained using occlusion and release of lithium ions. Hereinafter, a case where each battery 40 is a secondary battery (lithium ion secondary battery) will be described. That is, the battery pack 1 described below is a power supply including a plurality of secondary batteries.

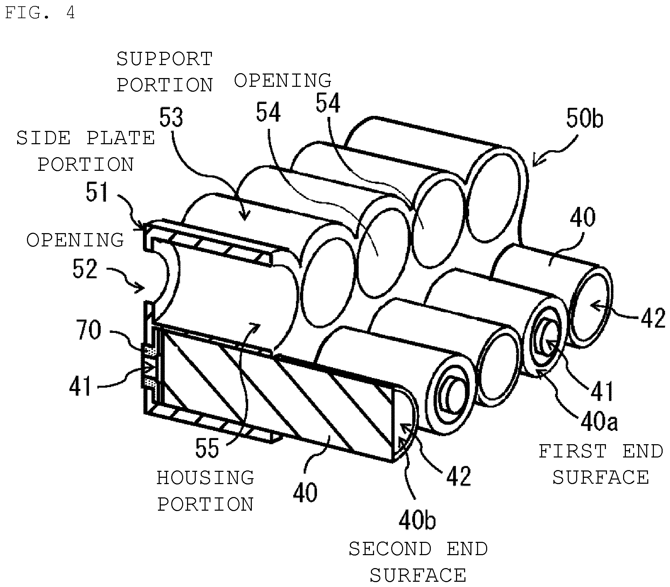

The battery module 20 further includes a holder 50 capable of supporting the plurality of batteries 40. The holder 50 includes, for example, a pair of holders 50a and 50b as illustrated in FIGS. 3 and 4. The holders 50a and 50b both have a common structure. FIG. 4 illustrates a sectional configuration example of the holder 50b, battery 40, and elastic waterproof member 70 (described later).

Each of the holders 50a and 50b has a side plate portion 51, for example, as illustrated in FIG. 4. The side plate portion 51 of holder 50a and the side plate portion 51 of holder 50b are arranged to face each other with the plurality of batteries 40 interposed therebetween in an extending direction of each of the batteries 40 (the direction in which the positive electrode terminal 41 and the negative electrode terminal 42 face each other). In the holders 50a, 50b, the side plate portion 51 has an opening 52 at a place facing the positive electrode terminal 41 and the negative electrode terminal 42 of each battery 40. Accordingly, the positive electrode terminal 41 or the negative electrode terminal 42 is exposed in the opening 52.

Each of the holders 50a, 50b further includes a support portion 53 that supports the plurality of batteries 40 in a hierarchical manner with a predetermined gap interposed therebetween, for example, as illustrated in FIG. 4. FIG. 4 illustrates a state in which the support portion 53 is provided in a manner of supporting the plurality of batteries 40 in two layers of the lowermost layer and the uppermost layer. The side plate portion 51 is coupled to one end portion of the support portion 53, and one end portion of the support portion 53 is an opening 54. The support portion 53 is provided with a housing portion 55 coupled to the opening 52 and the opening 54. A part of the battery 40 is housed in the housing portion 55.

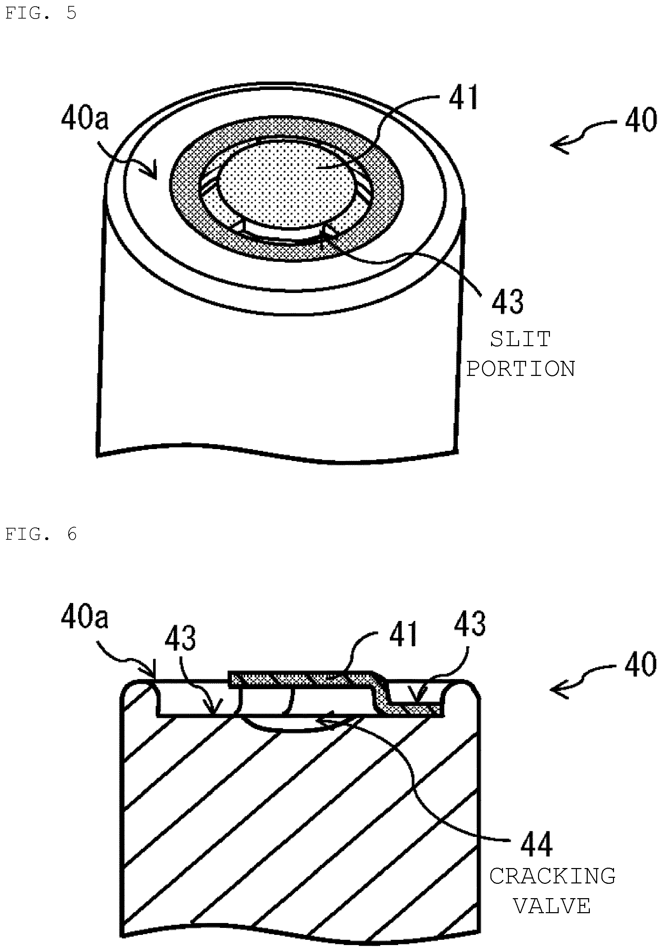

FIG. 5 illustrates a perspective configuration example of one end of the battery 40. FIG. 6 illustrates a sectional configuration example of one end of the battery 40.

As illustrated in FIGS. 4 and 5, the battery 40 has a first end surface 40a and a second end surface 40b facing each other, a positive electrode terminal 41 provided on the first end surface 40a, and a negative electrode terminal 42 provided on the second end surface 40b. The battery 40 has, for example, a columnar shape in which the first end surface 40a and the second end surface 40b extend in directions facing each other, and each of the first end surface 40a and the second end surface 40b has a circular shape. The shape of the battery 40 is not limited to a columnar shape. The shapes of the first end surface 40a and the second end surface 40b are not limited to the circular shape.

The positive electrode terminal 41 is made of a metal member. The positive electrode terminal 41 has a projecting shape (projection) on the first end surface 40a (see FIG. 6). In the first end surface 40a, one or a plurality of slit portions 43 is provided around the positive electrode terminal 41. In the first end surface 40a, a gap is provided on the back surface side of the positive electrode terminal 41, and this gap communicates with one or a plurality of slit portions 43. A cracking valve 44 is provided at the bottom of the gap. The cracking valve 44 has a function of discharging a gas generated in the battery 40 to the outside when the battery 40 generates abnormal heat. The negative electrode terminal 42 is made of a metal member. The negative electrode terminal 42 forms a flat surface on the second end surface 40b.

It is assumed that the plurality of batteries 40 are arranged side by side in a two-dimensional direction (a first direction and a second direction orthogonal to the first direction) orthogonal to the longitudinal direction of the battery 40 (a direction in which the first end surface 40a and the second end surface 40b face each other in the battery 40). At this time, the first end surface 40a of one battery 40 (first battery) in the plurality of batteries 40 provided in the battery pack 1 and the second end surface 40b of another battery 40 (second battery) in the plurality of batteries 40 provided in the battery pack 1 are arranged in the same plane. For example, the plurality of first end surfaces 40a and the plurality of second end surfaces 40b are alternately arranged in at least one of the first direction and the second direction in the same plane. The plurality of metal tabs 60 are arranged in a manner of facing each other with the plurality of batteries 40, provided in the battery pack 1, sandwiched in the extending direction of the batteries 40.

In the present description, the "extending direction of the batteries 40" is a direction parallel to a direction in which the first end surface and the second end surface face each other in a case where the batteries 40 have a columnar shape extending in a direction in which the first end surface and the second end surface face each other. In the present description, the "arrangement direction of the batteries 40" is a direction orthogonal to a direction in which the first end surface and the second end surface face each other in a case where the batteries 40 have a columnar shape extending in a direction in which the first end surface and the second end surface face each other.

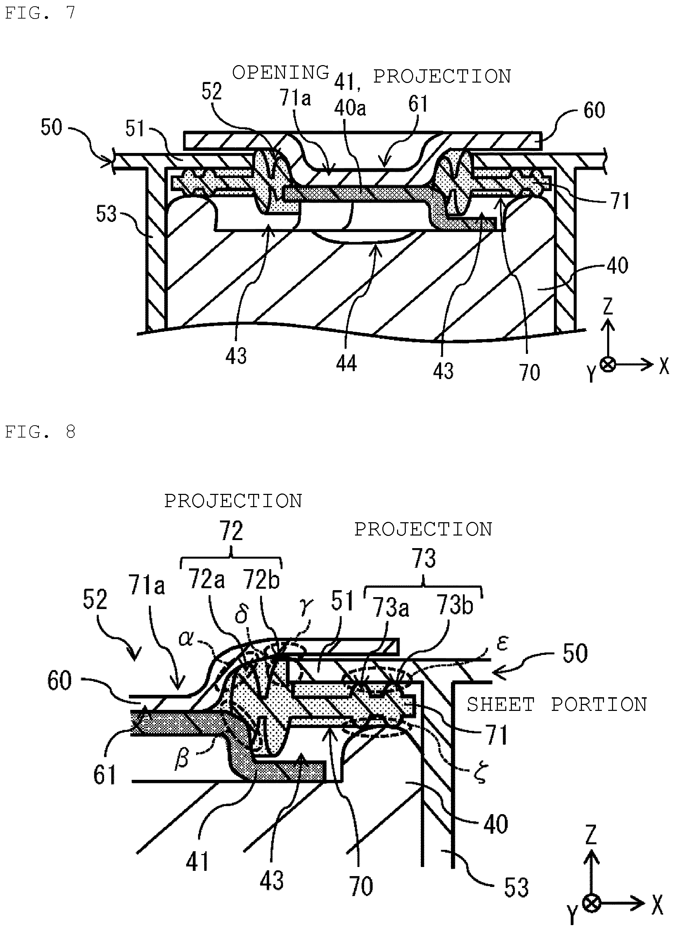

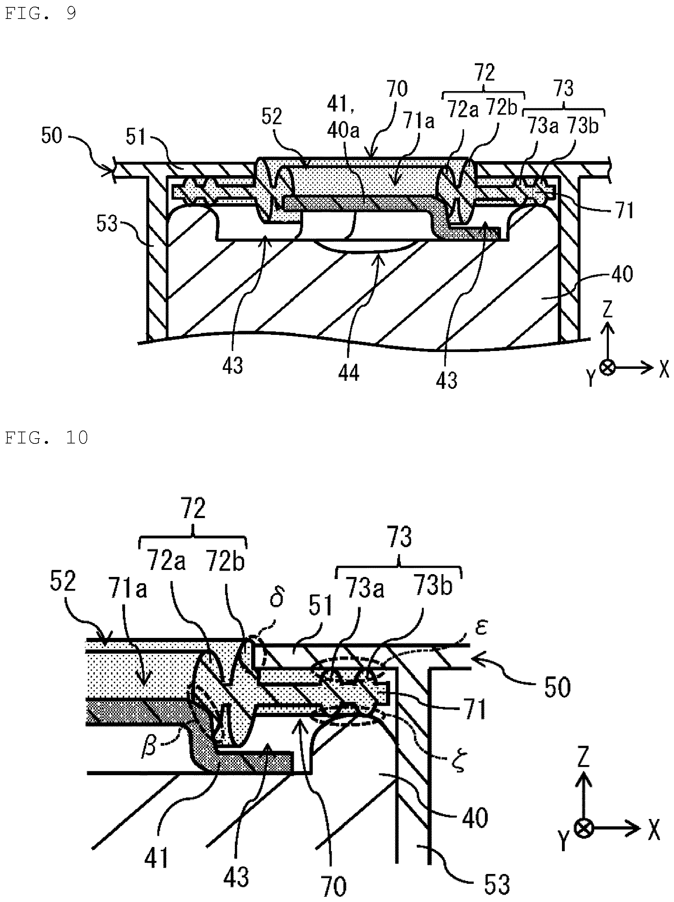

FIG. 7 illustrates a sectional configuration example of a part (positive electrode terminal 41 and the vicinity thereof) of the battery module 20. FIG. 8 is an enlarged view of a part of FIG. 7. FIG. 9 illustrates a sectional configuration example when the metal tab 60 is removed from the battery module 20 of FIG. 7. FIG. 10 is an enlarged view of a part of FIG. 9.

The metal tab 60 is arranged at a position facing the first end surface 40a with the side plate portion 51 interposed therebetween. The metal tab 60 is electrically connected to the positive electrode terminal 41 on the first end surface 40a of the first battery and to the negative electrode terminal 42 on the second end surface 40b of the second battery. The metal tab 60 is fixed to the positive electrode terminal 41. The metal tab 60 is fixed to the negative electrode terminal 42. Examples of a method for fixing the metal tab 60 to the positive electrode terminal 41 include welding. For example, laser welding or resistance welding is used for welding. The method for fixing the metal tab 60 to the positive electrode terminal 41 is not limited to the above, and may be a method other than welding, for example, connection by screwing, connection by crimping, or the like.

The metal tab 60 has a projection 61 (metal projection) that projects toward the positive electrode terminal 41 side at a place facing the positive electrode terminal 41. The projection 61 is inserted into an opening 52 of the holder 50 and an opening 71a of an elastic waterproof member 70 to be described later, and is fixed to the upper surface of the positive electrode terminal 41 through the opening 52 of the holder 50 and the opening 71a of the elastic waterproof member 70 to be described later. Insertion refers to a state in which at least a part of the projection 61 is inserted into the opening 52 of the holder 50 and the opening 71a of the elastic waterproof member 70.

For example, as illustrated in FIGS. 4 and 7 to 10, the battery module 20 includes the elastic waterproof member 70 provided between the first end surface 40a of the battery 40 and the side plate portion 51 of the holder 50. The elastic waterproof member 70 is made of, for example, a rubber material such as silicone rubber. The rubber material corresponds to a specific example of the elastic body. The elastic waterproof member 70 may be made of, for example, an elastic body other than a rubber material. For example, as illustrated in FIGS. 7 to 10, the elastic waterproof member 70 includes a sheet portion 71 and projections 72 and 73.

The sheet portion 71 is provided with an opening 71a having an opening diameter smaller than that of the opening 52 at a place facing the positive electrode terminal 41. The opening 71a is provided in a region facing the opening 52. The projection 72 is formed on the sheet portion 71 at a position closer to the opening 71a than the projection 73, and is formed on a position facing the positive electrode terminal 41. The projection 73 is formed on the sheet portion 71 at a position farther away from the opening 71a than the projection 72, and is formed on the first end surface 40a at a position not facing the positive electrode terminal 41 (for example, a region having a convex shape around the slit portion 43).

The projection 72 projects toward both the side plate portion 51 side and the positive electrode terminal 41 side of the sheet portion 71. The projection 72 is further in contact with the side plate portion 51, the positive electrode terminal 41, and the metal tab 60. The projection 72 is in contact with an end portion of the upper surface of the positive electrode terminal 41 and is in contact with a side surface of the opening 52 of the side plate portion 51. The upper surface of the positive electrode terminal 41 is a surface in contact with the metal tab 60 in the portion having a convex shape of the positive electrode terminal 41. The projection 72 is compressed in a direction in which the positive electrode terminal 41 and the metal tab 60 face each other by the positive electrode terminal 41 and the metal tab 60. The projection 72 is compressed in a direction in which the positive electrode terminal 41 and the side surface of the opening 52 of the side plate portion 51 face each other by the positive electrode terminal 41 and the side surface of the opening 52 of the side plate portion 51. Accordingly, the projection 72 is brought into close contact with a side surface (a portion surrounded by α in FIG. 8) and a skirt portion (a portion surrounded by γ in FIG. 8) of the projection 61 of the metal tab 60 and an end portion (β in FIG. 8) of the upper surface of the positive electrode terminal 41, and is also brought into close contact with an inner wall (a portion surrounded by δ in FIG. 8) of the opening 52 of the side plate portion 51. When the elastic waterproof member 70 is taken out of the battery module 20, the projection 72 has a vertically symmetrical shape (symmetrical in the Z-axis direction) with the sheet portion 71 as a center in a vertical section (section in the XZ plane).

For example, as illustrated in FIGS. 7 to 10, the projection 72 has projections 72a and 72b. The projection 72a is provided at a position close to the center of the elastic waterproof member 70 (that is, the position closer to the opening 71a) in a plan view of the elastic waterproof member 70. The projection 72b is provided at a position farther from the center of the elastic waterproof member 70 in a positional relationship with the projection 72a in the plan view of the elastic waterproof member 70. The projection 72a is configured to project toward both the side plate portion 51 side and the positive electrode terminal 41 side of the sheet portion 71, and to be in contact with the end portion of the upper surface of the positive electrode terminal 41 and the metal tab 60 (the side surface of the projection 61). The projection 72b is configured to project toward both the side plate portion 51 side and the positive electrode terminal 41 side of the sheet portion 71, and to be in contact with the side surface of the opening 52 of the side plate portion 51 and the metal tab 60 (the skirt portion of the metal tab 60). The projection 72a is compressed in a direction in which the positive electrode terminal 41 and the metal tab 60 face each other by the positive electrode terminal 41 and the metal tab 60. The projection 72b is compressed in a direction in which the positive electrode terminal 41 and the side surface of the opening 52 of the side plate portion 51 face each other by the positive electrode terminal 41 and the side surface of the opening 52 of the side plate portion 51. Accordingly, the projection 72a is brought into close contact with a side surface (a portion surrounded by α in FIG. 8) of the projection 61 of the metal tab 60 and an end portion (a portion surrounded by β in FIG. 8) of an upper surface of the positive electrode terminal 41. The projection 72b is brought into close contact with a skirt portion (a portion surrounded by γ in FIG. 8) of the projection 61 of the metal tab 60 and an inner wall (a portion surrounded by δ in FIG. 8) of the opening 52 of the side plate portion 51.

In the projection 72a, a portion that projects toward the side plate portion 51 side of the sheet portion 71 and a portion that projects toward the positive electrode terminal 41 side of the sheet portion 71 are provided at positions facing each other with the sheet portion 71 interposed therebetween. In the projection 72b, a portion that projects toward the side plate portion 51 side of the sheet portion 71 and a portion that projects toward the positive electrode terminal 41 side of the sheet portion 71 are provided at positions facing each other with the sheet portion 71 interposed therebetween. When the elastic waterproof member 70 is taken out of the battery module 20, the projection 72a has a vertically symmetrical shape with the sheet portion 71 as a center in a vertical section (section in the XZ plane). When the elastic waterproof member 70 is taken out of the battery module 20, the projection 72b has a vertically symmetrical shape with the sheet portion 71 as a center in a vertical section (section in the XZ plane).

For example, as illustrated in FIGS. 7 to 10, the projection 73 has projections 73a and 73b. The projection 73a is provided at a position close to the center of the elastic waterproof member 70 (that is, the position closer to the opening 71a) in the plan view of the elastic waterproof member 70. The projection 73b is provided at a position farther from the center of the elastic waterproof member 70 in a positional relationship with the projection 73a in the plan view of the elastic waterproof member 70. The projections 73a and 73b are configured to project toward both the side plate portion 51 side and the positive electrode terminal 41 side of the sheet portion 71, respectively. The projections 73a and 73b are configured to be in contact with the side plate portion 51 (portion surrounded by ε in FIG. 8), and at least one of the projections 73a and 73b is configured to be in contact with the periphery of the positive electrode terminal 41 (a region having a convex shape around the slit portion 43 (portion surrounded by ζ in FIG. 8)). The projections 73a and 73b are compressed in a direction in which the side plate portion 51 and the periphery of the positive electrode terminal 41 (a region having a convex shape around the slit portion 43) face each other by the side plate portion 51 and the periphery of the positive electrode terminal 41 (a region having a convex shape around the slit portion 43). Therefore, the projections 73a and 73b are brought into close contact with the side plate portion 51 (portion surrounded by ε in FIG. 8), and at least one of the projections 73a and 73b is brought into close contact with the periphery of the positive electrode terminal 41 (a region having a convex shape around the slit portion 43 (portion surrounded by ζ in FIG. 8)).

In the projection 73a, a portion that projects toward the side plate portion 51 side of the sheet portion 71 and a portion that projects toward the positive electrode terminal 41 side of the sheet portion 71 are provided at positions facing each other with the sheet portion 71 interposed therebetween. In the projection 73b, a portion that projects toward the side plate portion 51 side of the sheet portion 71 and a portion that projects toward the positive electrode terminal 41 side of the sheet portion 71 are provided at positions facing each other with the sheet portion 71 interposed therebetween. When the elastic waterproof member 70 is taken out of the battery module 20, the projection 73a has a vertically symmetrical shape with the sheet portion 71 as a center in a vertical section (section in the XZ plane). When the elastic waterproof member 70 is taken out of the battery module 20, the projection 73b has a vertically symmetrical shape with the sheet portion 71 as a center in a vertical section (section in the XZ plane).

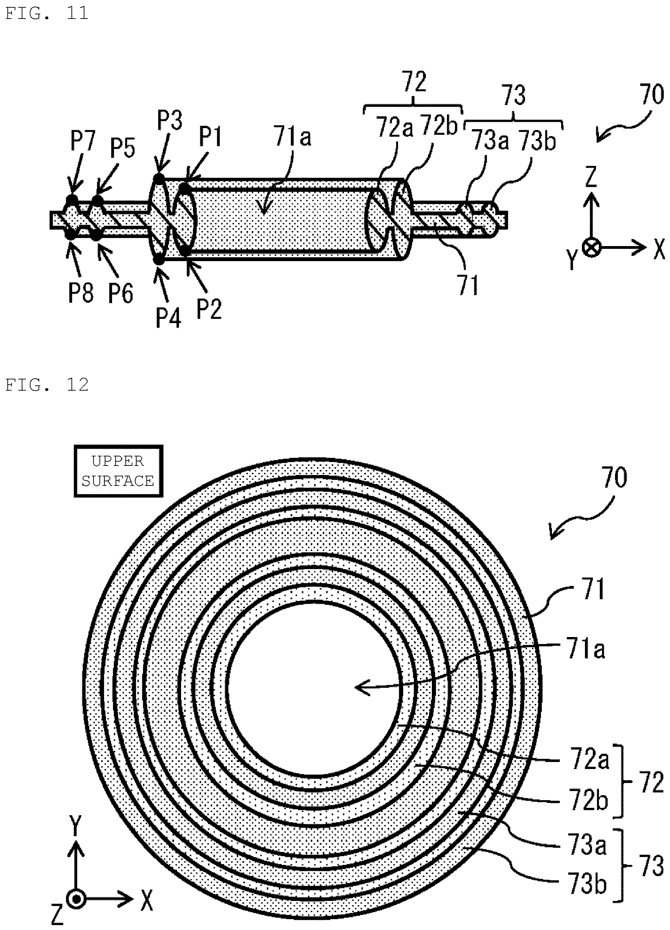

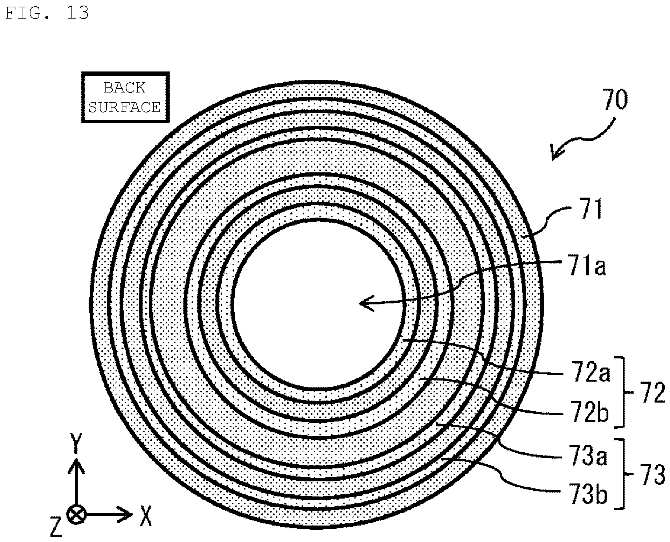

FIG. 11 illustrates a sectional configuration example when the elastic waterproof member 70 is taken out from the battery module 20. FIG. 12 illustrates a configuration example of an upper surface of the elastic waterproof member 70 of FIG. 11. FIG. 13 illustrates a configuration example of a back surface of the elastic waterproof member 70 of FIG. 11. For example, as illustrated in FIGS. 11 to 13, the elastic waterproof member 70 has a vertically symmetrical shape with the sheet portion 71 as the center in the vertical section (section on the XZ plane). Further, the projections 72a, 72b, 73a, and 73b and the opening 71a are concentric as illustrated in FIGS. 11 to 13, for example. Therefore, the elastic waterproof member 70 has no distinction between the front and back.

The heights of the projections 72a and 72b are set in consideration of compression by the positive electrode terminal 41 and the metal tab 60. For example, the height of the projection 72b is higher than the height of the projection 72a. The height of the projection 72a is a distance from a vertex P1 of a portion of the projection 72a provided on the upper surface side of the sheet portion 71 to a vertex P2 of a portion of the projection 72a provided on the back surface side of the sheet portion 71. The height of the projection 72b is a distance from a vertex P3 of a portion of the projection 72b provided on the upper surface side of the sheet portion 71 to a vertex P4 of a portion of the projection 72b provided on the back surface side of the sheet portion 71.

The heights of the projections 73a and 73b are set in consideration of compression by the periphery of the positive electrode terminal 41 (a region having a convex shape around the slit portion 43) and the side plate portion 51. The heights of the projections 73a and 73b are equal to each other, for example. The height of the projection 73a is a distance from a vertex P5 of a portion of the projection 73a provided on the upper surface side of the sheet portion 71 to a vertex P6 of a portion of the projection 73a provided on the back surface side of the sheet portion 71. The height of the projection 73b is a distance from a vertex P7 of a portion of the projection 73b provided on the upper surface side of the sheet portion 71 to a vertex P8 of a portion of the projection 73b provided on the back surface side of the sheet portion 71.

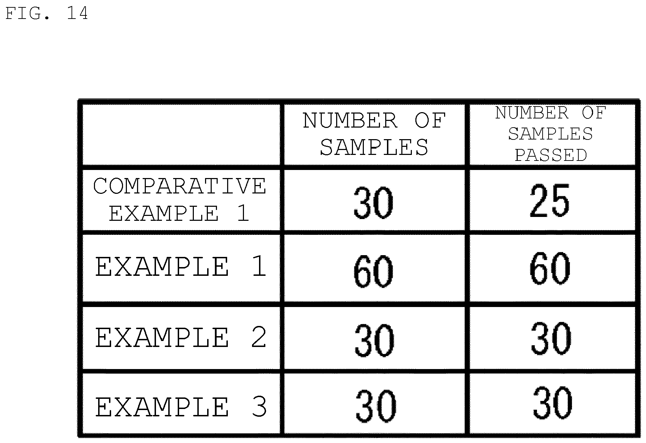

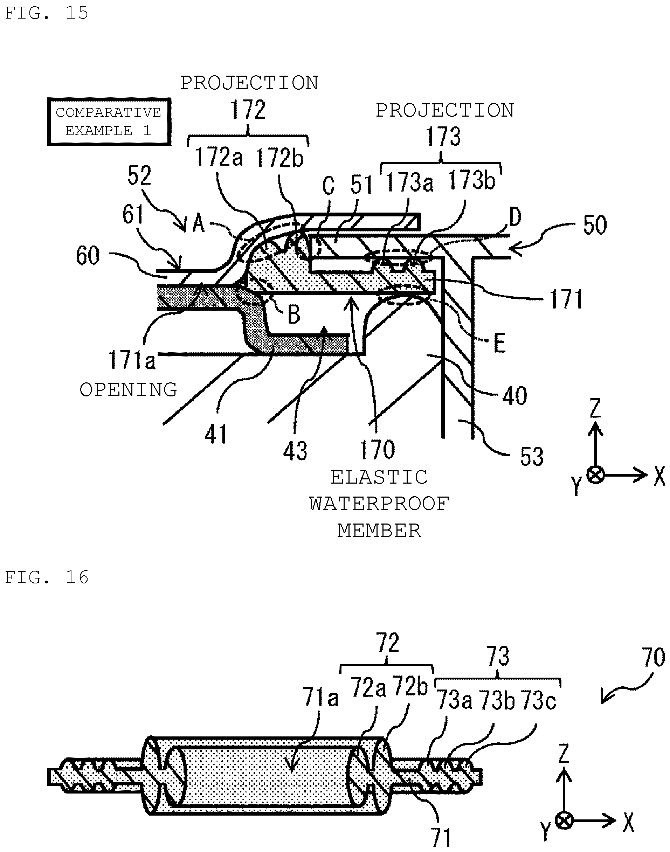

Next, the waterproof property of the battery pack 1 of the example will be described in comparison with the battery pack of the comparative example. FIG. 14 illustrates results of the waterproof property test. The battery module housed in the battery pack of Comparative Example 1 of FIG. 14 has, for example, the configuration illustrated in FIG. 15. The battery module illustrated in FIG. 15 corresponds to the battery pack 1 of the embodiment in which the elastic waterproof member 170 is provided instead of the elastic waterproof member 70. In Examples 1, 2, and 3, the configurations of the battery pack 1 are common to each other except that the production lots are different from each other.

The elastic waterproof member 170 is made of, for example, a rubber material such as silicone rubber. The rubber material corresponds to a specific example of the elastic body. The elastic waterproof member 170 may be made of, for example, an elastic body other than a rubber material. For example, as illustrated in FIG. 15, the elastic waterproof member 170 includes a sheet portion 171 and projections 172 and 173.

The sheet portion 171 is provided with an opening 171a having an opening diameter smaller than that of the opening 52 at a place facing the positive electrode terminal 41. The opening 171a is provided in a region facing the opening 52. The projection 172 is formed on the sheet portion 71 at a position closer to the opening 171a than the projection 173, and is formed on a position facing the positive electrode terminal 41. The projection 173 is formed on the sheet portion 171 at a position farther away from the opening 171a than the projection 172, and is formed on the first end surface 40a at a position not facing the positive electrode terminal 41 (for example, a region having a convex shape around the slit portion 43).

The projection 172 projects only to the side plate portion 51 side of the sheet portion 71 and is in contact with the side plate portion 51, the positive electrode terminal 41, and the metal tab 60. The projection 172 is in contact with an end portion of the upper surface of the positive electrode terminal 41 and is in contact with a side surface of the opening 52 of the side plate portion 51. The projection 172 is compressed in a direction in which the positive electrode terminal 41 and the metal tab 60 face each other by the positive electrode terminal 41 and the metal tab 60. The projection 172 is compressed in a direction in which the positive electrode terminal 41 and the side surface of the opening 52 of the side plate portion 51 face each other by the positive electrode terminal 41 and the side surface of the opening 52 of the side plate portion 51. However, as compared with the battery pack 1 of the embodiment, the force for compressing the projection 172 is weak as the projection 172 is not provided with a portion that projects toward the positive electrode terminal 41 side. Therefore, the projection 172 is lightly in contact with the end portion of the upper surface of the positive electrode terminal 41, the metal tab 60, and the side surface of the opening 52 of the side plate portion 51.

For example, as illustrated in FIG. 15, the projection 172 has projections 172a and 172b. The projection 172a is provided at a position close to the center of the elastic waterproof member 170 (that is, the position closer to the opening 171a) in a plan view of the elastic waterproof member 170. The projection 172b is provided at a position farther from the center of the elastic waterproof member 170 in a positional relationship with the projection 172a in the plan view of the elastic waterproof member 170. The projection 172a is configured to project only toward the side plate portion 51 side of the sheet portion 171, and to be in contact with the end portion of the upper surface of the positive electrode terminal 41 and the metal tab 60 (the side surface of the projection 61). The projection 172b is configured to project only toward the side plate portion 51 side of the sheet portion 171, and to be in contact with the side surface of the opening 52 of the side plate portion 51 and the metal tab 60 (the skirt portion of the metal tab 60). The projection 172a is compressed in a direction in which the positive electrode terminal 41 and the metal tab 60 face each other by the positive electrode terminal 41 and the metal tab 60. The projection 172b is compressed in a direction in which the positive electrode terminal 41 and the side surface of the opening 52 of the side plate portion 51 face each other by the positive electrode terminal 41 and the side surface of the opening 52 of the side plate portion 51. However, as compared with the battery pack 1 of the example, the force for compressing the projections 172a and 172b is weak as the projections 172a and 172b are not provided with portions that project toward the positive electrode terminal 41 side. Therefore, the projections 172a and 172b are lightly in contact with the end portion of the upper surface of the positive electrode terminal 41, the metal tab 60, and the side surface of the opening 52 of the side plate portion 51.

For example, as illustrated in FIG. 15, the projection 173 has projections 173a and 173b. The projection 173a is provided at a position close to the center of the elastic waterproof member 170 (that is, the position closer to the opening 171a) in the plan view of the elastic waterproof member 170. The projection 173b is provided at a position farther from the center of the elastic waterproof member 170 in a positional relationship with the projection 173a in the plan view of the elastic waterproof member 170. Each of the projections 173a and 173b is configured to project only toward the side plate portion 51 side of the sheet portion 171. The projections 173a and 173b are configured to be in contact with the side plate portion 51. The projections 173a and 173b are compressed in a direction in which the side plate portion 51 and the periphery of the positive electrode terminal 41 (a region having a convex shape around the slit portion 43) face each other by the side plate portion 51 and the periphery of the positive electrode terminal 41 (a region having a convex shape around the slit portion 43). However, as compared with the battery pack 1 of the embodiment, the force for compressing the projections 173a and 173b is weak as the projections 173a and 173b are not provided with portions that project toward the positive electrode terminal 41 side. Accordingly, the projections 173a and 173b are brought into light contact with the side plate portion 51, and the side plate portion 51 and the periphery of the positive electrode terminal 41 (a region having a convex shape around the slit portion 43).

A water immersion test method will be described. First, the fully charged battery pack (battery packs 1 of the examples and the battery pack of the comparative examples) was left for 72 hours with the entire battery pack immersed in water. Subsequently, each battery pack was naturally dried for 24 hours. Thereafter, the battery pack was disassembled, and the positive electrode terminal 41 was observed. In a case where rust or corrosion did not occur in the positive electrode terminal 41, the positive electrode terminal was determined to pass the waterproof property test. On the other hand, in a case where rust or corrosion occurred in the positive electrode terminal 41, the positive electrode terminal was determined to fail the waterproof property test.

FIG. 14 shows that in the battery packs 1 of Examples 1, 2, and 3, all the samples passed the waterproof property test. It can be said from this that high waterproof property is obtained by the action of the elastic waterproof member 70. On the other hand, in the battery pack of Comparative Example 1, it is found that 5 samples among 30 samples failed to pass the waterproof property test.

### <1-2. Effects>

Next, effects of the battery pack 1 will be described.

In general, a battery module having a battery such as a lithium ion secondary battery is used in a state of being accommodated in a case. When moisture or the like enters the battery module, the battery may fail. Therefore, for example, in the invention described in Japanese Patent Application Laid-Open No. 2013-073864, it is proposed to provide a rubber ring between the positive electrode terminal and the battery accommodating portion. By the way, in the battery pack, further improvement in waterproof property is required.

On the other hand, in the present embodiment, the elastic waterproof member 70 is provided between the battery 40 and the holder 50. The elastic waterproof member 70 is provided with a projection 72 that projects toward both the side plate portion 51 side and the positive electrode terminal 41 side of the sheet portion 71 and is in contact with the side plate portion 51 and the positive electrode terminal 41. With such a configuration, the side plate portion 51 and the projection 72 are brought into close contact with each other and the positive electrode terminal 41 and the projection 72 are brought into close contact with each other using elastic force of the elastic body. As a result, entry of moisture into the positive electrode terminal 41 can be prevented. Therefore, sufficient waterproof property can be obtained.

In the present embodiment, the projection 72 is in contact with the end portion of the upper surface of the positive electrode terminal 41 and is in contact with the side surface of the opening 52. As a result, the end portion of the upper surface of the positive electrode terminal 41 and the projection 72 are brought into close contact with each other, and the side surface of the opening 52 of the side plate portion 51 and the projection 72 are brought into close contact with each other using elastic force of the elastic body. As a result, entry of moisture into the positive electrode terminal 41 can be prevented. Therefore, sufficient waterproof property can be obtained.

Further, in the present embodiment, the projection 72 has a vertically symmetrical shape with the sheet portion 71 as the center in the vertical section (section on the XZ plane). As a result, since the front and back surfaces of the elastic waterproof member 70 are eliminated, it is not necessary to confirm the front and back surfaces of the elastic waterproof member 70 in the process of manufacturing the battery pack 1. As a result, in the process of manufacturing the battery pack 1, the number of steps for confirming the front and back surfaces of the elastic waterproof member 70 can be eliminated, and an inspection device for confirming the front and back surfaces of the elastic waterproof member 70 can be omitted.

In the present embodiment, the projection 72a projects toward both the side plate portion 51 side and the positive electrode terminal 41 side of the sheet portion 71 and is in contact with the end portion of the upper surface of the positive electrode terminal 41, and the projection 72b projects toward both the side plate portion 51 side and the positive electrode terminal 41 side of the sheet portion 71 and is in contact with the side surface of the opening 52 of the side plate portion 51. As a result, the projection 72 is compressed in a direction in which the positive electrode terminal 41 and the metal tab 60 face each other by the positive electrode terminal 41 and the metal tab 60. The projection 72 is compressed in a direction in which the positive electrode terminal 41 and the side surface of the opening 52 of the side plate portion 51 face each other by the positive electrode terminal 41 and the side surface of the opening 52 of the side plate portion 51. As a result, the projection 72 is brought into close contact with the end portion of the upper surface of the positive electrode terminal 41 and is also brought into close contact with the side surface of the opening 52 of the side plate portion 51. Therefore, entry of moisture into the positive electrode terminal 41 can be prevented, and thus sufficient waterproof property can be obtained.

In the present embodiment, in the projection 72a, a portion that projects toward the side plate portion 51 side of the sheet portion 71 and a portion that projects toward the positive electrode terminal 41 side of the sheet portion 71 are provided at positions facing each other with the sheet portion 71 interposed therebetween. Further, in the projection 72b, a portion that projects toward the side plate portion 51 side of the sheet portion 71 and a portion that projects toward the positive electrode terminal 41 side of the sheet portion 71 are provided at positions facing each other with the sheet portion 71 interposed therebetween. As a result, since the front and back surfaces of the elastic waterproof member 70 are eliminated, it is not necessary to confirm the front and back surfaces of the elastic waterproof member 70 in the process of manufacturing the battery pack 1. As a result, in the process of manufacturing the battery pack 1, the number of steps for confirming the front and back surfaces of the elastic waterproof member 70 can be eliminated, and an inspection device for confirming the front and back surfaces of the elastic waterproof member 70 can be omitted.

In the present embodiment, each of the projections 72a and 72b has a vertically symmetrical shape with the sheet portion 71 as the center in the vertical section (section on the XZ plane). As a result, since the front and back surfaces of the elastic waterproof member 70 are eliminated, it is not necessary to confirm the front and back surfaces of the elastic waterproof member 70 in the process of manufacturing the battery pack 1. As a result, in the process of manufacturing the battery pack 1, the number of steps for confirming the front and back surfaces of the elastic waterproof member 70 can be eliminated, and an inspection device for confirming the front and back surfaces of the elastic waterproof member 70 can be omitted.

In the present embodiment, the height of the projection 72b from the sheet portion 71 is higher than the height of the projection 72a from the sheet portion 71. With such a configuration, the shapes of the projections 72a and 72b can be brought close to a shape of a gap formed between the positive electrode terminal 41 and the side plate portion 51 when the projections 72a and 72b are sandwiched between the positive electrode terminal 41 and the side plate portion 51. As a result, the projections 72a and 72b can be compressed relatively uniformly, and the close-contact property between the projections 72a and 72b and the positive electrode terminal 41 or the side plate portion 51 can be improved. Therefore, entry of moisture into the positive electrode terminal 41 can be prevented, and thus sufficient waterproof property can be obtained.

In the present embodiment, the projection 72 is also in contact with the metal tab 60. As a result, since the projection 72 and the metal tab 60 can be brought into close contact with each other, it is possible to obtain a higher waterproof property than a case where the projection 72 is not in contact with the metal tab 60.

In the present embodiment, the projection 72a is in contact with the end portion of the upper surface of the positive electrode terminal 41 and the metal tab 60, and the projection 72b is in contact with the side surface of the opening 52 of the side plate portion 51 and the metal tab 60. As a result, the end portion of the upper surface of the positive electrode terminal 41 and the metal tab 60 are brought into close contact with each other, and the side surface of the opening 52 of the side plate portion 51 and the metal tab 60 are brought into close contact with each other using elastic force of the elastic body. As a result, entry of moisture into the positive electrode terminal 41 can be prevented. Therefore, sufficient waterproof property can be obtained.

In the present embodiment, the projection 72a is in contact with the side surface of the projection 61, and the projection 72b is in contact with the skirt portion of the projection 61 of the metal tab 60. As a result, the projection 72a and the side surface of the projection 61 are brought into close contact with each other and the projection 72b and the skirt portion of the projection 61 of the metal tab 60 are brought into close contact with each other using elastic force of the elastic body. As a result, entry of moisture into the positive electrode terminal 41 can be prevented. Therefore, sufficient waterproof property can be obtained.

In the present embodiment, the height of the projection 72b from the sheet portion 71 is higher than the height of the projection 72a from the sheet portion 71. As a result, the shapes of the projections 72a and 72b can be brought close to the shape of a gap formed between the positive electrode terminal 41 and the metal tab 60 when the projections 72a and 72b are sandwiched between the positive electrode terminal 41 and the metal tab 60. As a result, the projections 72a and 72b can be compressed relatively uniformly, and the close-contact property between the projections 72a and 72b and the metal tab 60 can be improved. Therefore, entry of moisture into the positive electrode terminal 41 can be prevented, and thus sufficient waterproof property can be obtained.

In the present embodiment, the elastic waterproof member 70 has a vertically symmetrical shape with the sheet portion 71 as the center in the vertical section (section on the XZ plane). As a result, since the front and back surfaces of the elastic waterproof member 70 are eliminated, it is not necessary to confirm the front and back surfaces of the elastic waterproof member 70 in the process of manufacturing the battery pack 1. As a result, in the process of manufacturing the battery pack 1, the number of steps for confirming the front and back surfaces of the elastic waterproof member 70 can be eliminated, and an inspection device for confirming the front and back surfaces of the elastic waterproof member 70 can be omitted.

In the present embodiment, the elastic waterproof member 70 is formed of rubber. With such a configuration, the positive electrode terminal 41 and the side plate portion 51 or the metal tab 60 are brought into close contact with each other by utilizing elastic force of the elastic waterproof member 70. As a result, entry of moisture into the positive electrode terminal 41 can be prevented. Therefore, sufficient waterproof property can be obtained.

### <2. Modifications>

Next, modifications of the battery pack 1 according to the above embodiment will be described.

### <2-1. Modification A>

In the above-mentioned embodiment, the projection 73 may have three or more projections which project toward both the side plate portion 51 side and the positive electrode terminal 41 side of the sheet portion 71. In the above-mentioned embodiment, for example, as illustrated in FIG. 16, the projection 73 may have three projections 73a and 73b and 73c which project toward both the side plate portion 51 side and the positive electrode terminal 41 side of the sheet portion 71.

For example, as illustrated in FIG. 16, the projection 73c is provided at a position farther from the center of the elastic waterproof member 70 in a positional relationship with the projections 73a and 73b. In such a case, as in the above-mentioned embodiment, the projection 73 can still be brought into close contact with the side plate portion 51 and the periphery of the positive electrode terminal 41 (a region having a convex shape around the slit portion 43). As a result, entry of moisture into the positive electrode terminal 41 can be prevented. Therefore, sufficient waterproof property can be obtained.

### <2-2. Modification B>

In the above-described embodiment, the elastic waterproof member 70 may have a vertically asymmetric shape with the sheet portion 71 as the center in the vertical section (section on the XZ plane).

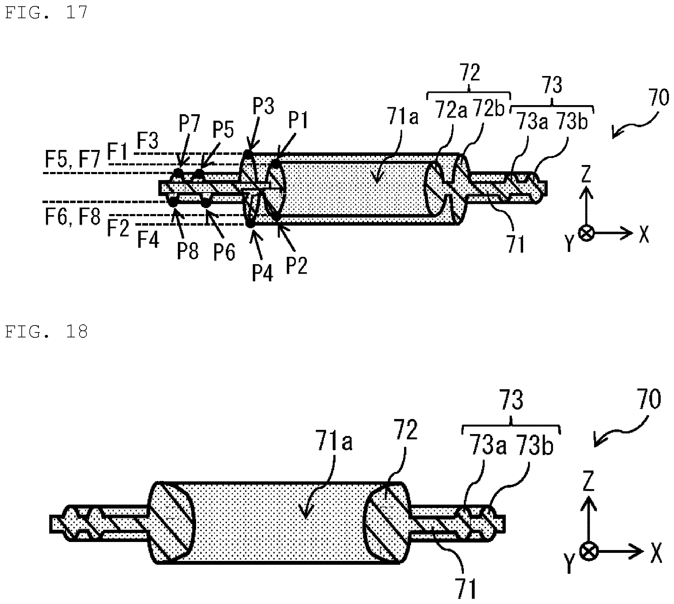

For example, in the projection 72b, as illustrated in FIG. 17, a portion that projects toward the side plate portion 51 side of the sheet portion 71 and a portion that projects toward the positive electrode terminal 41 side of the sheet portion 71 may be provided at positions not facing each other with the sheet portion 71 interposed therebetween. This is allowed as long as, in the projection 72b, the portion that projects toward the side plate portion 51 side of the sheet portion 71 can be brought into close contact with the skirt portion (portion surrounded by γ in FIG. 8) of the projection 61 of the metal tab 60 and the inner wall (portion surrounded by δ in FIG. 8) of the opening 52 of the side plate portion 51.

Similarly, in the projections 73a and 73b, for example, as illustrated in FIG. 17, a portion that projects toward the side plate portion 51 side of the sheet portion 71 and a portion that projects toward the positive electrode terminal 41 side of the sheet portion 71 may be provided at positions not facing each other with the sheet portion 71 interposed therebetween. This is allowed as long as the projections 73a and 73b are configured to be in contact with the side plate portion 51 (portion surrounded by ε in FIG. 8), and at least one of the projections 73a and 73b is configured to be in contact with the periphery of the positive electrode terminal 41 (a region having a convex shape around the slit portion 43 (portion surrounded by ζ in FIG. 8)).

As described above, in the present modification, the elastic waterproof member 70 has a vertically asymmetric shape with the sheet portion 71 as the center in the vertical section (section on the XZ plane) within a range in which the close-contact property between the projection 72b and the metal tab 60 or the side plate portion 51, and the close-contact property between the projections 73a and 73b and the side plate portion 51 and the periphery of the positive electrode terminal 41 (a region having a convex shape around the slit portion 43) are not impaired. Therefore, as in the above embodiment, sufficient waterproof property can be obtained.

In the present modification, the heights of the projections 72a and 72b are set in consideration of compression by the positive electrode terminal 41 and the metal tab 60. For example, the height of the projection 72b is higher than the height of the projection 72a. The height of the projection 72a in the present modification is a distance from a plane F1 including the vertex P1 and parallel to the sheet portion 71 to a plane F2 including the vertex P2 and parallel to the sheet portion 71. The height of the projection 72b in the present modification is a distance from a plane F3 including the vertex P3 and parallel to the sheet portion 71 to a plane F4 including the vertex P4 and parallel to the sheet portion 71.

The heights of the projections 73a and 73b are set in consideration of compression by the periphery of the positive electrode terminal 41 (a region having a convex shape around the slit portion 43) and the side plate portion 51. The heights of the projections 73a and 73b are equal to each other, for example. The height of the projection 73a is a distance from a plane F5 including the vertex P5 and parallel to the sheet portion 71 to a plane F6 including the vertex P6 and parallel to the sheet portion 71. The height of the projection 73b is a distance from a plane F7 including the vertex P7 and parallel to the sheet portion 71 to a plane F8 including the vertex P8 and parallel to the sheet portion 71.

### <2-3. Modification C>

In the above-mentioned embodiment, for example, as illustrated in FIG. 18, the projection 72 may be formed of one projection which projects toward both the side plate portion 51 side and the positive electrode terminal 41 side of the sheet portion 71. In such a case, the projection 72 is still brought into close contact with a side surface (a portion surrounded by α in FIG. 8) and a skirt portion (a portion surrounded by γ in FIG. 8) of the projection 61 of the metal tab 60 and an end portion (β in FIG. 8) of the upper surface of the positive electrode terminal 41, and is also brought into close contact with an inner wall (a portion surrounded by δ in FIG. 8) of the opening 52 of the side plate portion 51. As a result, entry of moisture into the positive electrode terminal 41 can be prevented. Therefore, as in the above embodiment, sufficient waterproof property can be obtained.

### <2-4. Modification D>

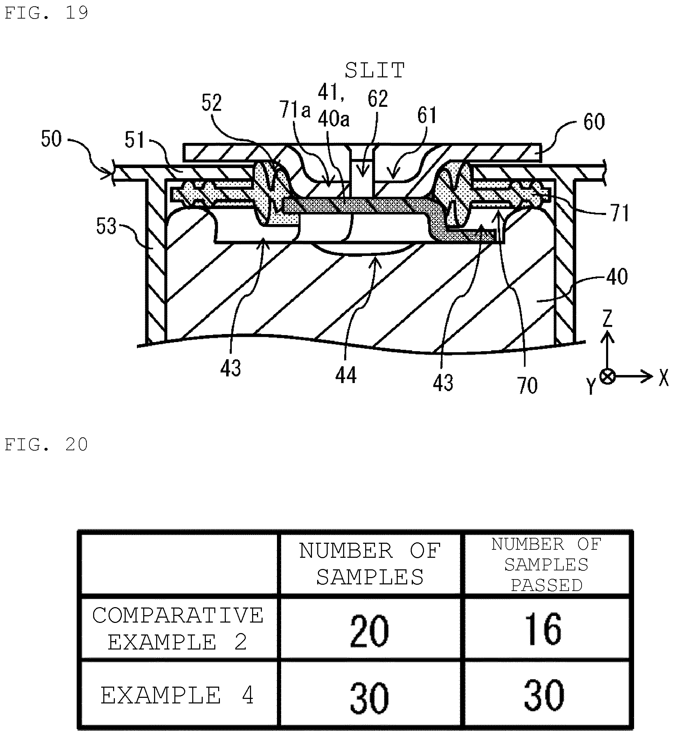

In the above embodiment, the metal tab 60 may have one or a plurality of slits 62 in the projection 61, for example, as illustrated in FIG. 19. When the one or the plurality of slits 62 are provided in the projection 61, moisture or the like may enter the positive electrode terminal 41 through the one or the plurality of slits 62. However, the elastic waterproof member 70 is provided between the one or the plurality of slits 62 and the inside of the positive electrode terminal 41. Accordingly, entry of moisture into the positive electrode terminal 41 can be prevented. Therefore, sufficient waterproof property can be obtained.

Next, the waterproof property of the battery pack 1 of Example 4 (Modification D) will be described in comparison with the battery pack of Comparative Example 2. FIG. 20 illustrates results of a waterproof property test in a state where slits are provided in the metal tab 60. The battery pack of Comparative Example 2 has a configuration in which a slit is provided in the metal tab 60 of the battery pack of Comparative Example 1. The battery pack 1 of Example 4 (Modification D) has a configuration in which the slit 62 is provided in the metal tab 60 of the battery pack of Example 1. Note that the method of the waterproof property test is similar to the method described in <1. First embodiments

FIG. 20 shows that in the battery pack 1 of Example 4, all the samples passed the waterproof property test. It can be said from this that in a case where the slit 62 is provided in the metal tab 60, high waterproof property is still obtained by the action of the elastic waterproof member 70. On the other hand, in the battery pack of Comparative Example 2, it can be seen that there were 14 samples 30 in which moisture entered through the slit 62 because the slit 62 is provided in the metal tab 60.

Although the present technology has been described with reference to one embodiment, the present technology is not limited to the aspect described in the above embodiment, and various modifications can be made with respect to the present technology.

For example, lithium is used as the electrode reactant of the secondary battery, but the kind of the electrode reactant is not particularly limited. Specifically, the electrode reactant may be another element of Group 1 in the long-periodic table such as sodium or potassium, an element of Group 2 in the long-periodic table such as magnesium or calcium or another light metal such as aluminum.

Note that the effects described in the present description are merely examples and are not limited, and other effects may be provided.

## Claims

1. A battery pack comprising:
a plurality of batteries;
a holder that is capable of supporting the plurality of batteries; and
an elastic body provided between the batteries and the holder,
wherein
each of the batteries has an end surface on which a positive electrode terminal having a convex shape is formed,
the holder has a side plate portion provided with a first opening at a place facing the positive electrode terminal, and
the elastic body includes
a sheet portion that is arranged in a region between the end surface and the side plate portion and provided with a second opening having an opening diameter smaller than an opening diameter of the first opening at a place facing the positive electrode terminal, and
a projection that projects toward both the side plate portion side and the positive electrode terminal side of the sheet portion and is in contact with the side plate portion and the positive electrode terminal.

2. The battery pack according to claim 1, wherein the projection is in contact with an end portion of an upper surface of the positive electrode terminal and is in contact with an inner wall of the first opening.

3. The battery pack according to claim 1, wherein the projection has a shape, which is vertically symmetrical, with the sheet portion as a center in a vertical section.

4. The battery pack according to claim 1, wherein the projection includes
a first projection that projects toward both the side plate portion side and the positive electrode terminal side of the sheet portion and is in contact with an end portion of an upper surface of the positive electrode terminal, and
a second projection that projects toward both the side plate portion side and the positive electrode terminal side of the sheet portion and is in contact with a side surface of the first opening.

5. The battery pack according to claim 4, wherein
in the first projection, a portion that projects toward the side plate portion side of the sheet portion and a portion that projects toward the positive electrode terminal side of the sheet portion are provided at positions facing each other with the sheet portion interposed between the portions, and
in the second projection, a portion that projects toward the side plate portion side of the sheet portion and a portion that projects toward the positive electrode terminal side of the sheet portion are provided at positions facing each other with the sheet portion interposed between the portions.

6. The battery pack according to claim 5, wherein
the first projection has a shape, which is vertically symmetrical, with the sheet portion as a center in a vertical section, and
the second projection has a shape, which is vertically symmetrical, with the sheet portion as a center in a vertical section.

7. The battery pack according to claim 6, wherein a height of the second projection is higher than a height of the first projection.

8. The battery pack according to claim 1 further comprising a metal tab that is arranged at a position facing the end surface with the side plate portion interposed between the metal tab and the end surface, electrically connects the plurality of secondary batteries to each other, and is fixed to the positive electrode terminal,
wherein the projection is also in contact with the metal tab.

9. The battery pack according to claim 4 further comprising a metal tab that is arranged at a position facing the end surface with the side plate portion interposed between the metal tab and the end surface, electrically connects the plurality of secondary batteries to each other, and is fixed to the positive electrode terminal,
wherein
the first projection is in contact with an end portion of an upper surface of the positive electrode terminal and the metal tab, and
the second projection is in contact with a side surface of the first opening and the metal tab.

10. The battery pack according to claim 9, wherein
the metal tab has a metal projection fixed to the positive electrode terminal through the first opening and the second opening,
the first projection is in contact with a side surface of the metal projection, and
the second projection is in contact with a skirt portion of the metal projection of the metal tab.

11. The battery pack according to claim 10, wherein a height of the second projection is higher than a height of the first projection.

12. The battery pack according to claim 1, wherein the elastic body has a shape, which is vertically symmetrical, with the sheet portion as a center in a vertical section.

13. The battery pack according to claim 1, wherein the elastic body is formed of a rubber.
